# EUROPEAN PATENT SPECIFICATION

(11) **EP 1 500 458 B1**
(45) Date of publication and mention of the grant of the patent: **25.04.2007**
(21) Application number: 04016675.3
(22) Date of filing: 15.07.2004
(51) Int. Cl.: B23K 9/28, B23K 9/167, B23K 9/29, B23K 9/32

(54) **Welding-type system with a welding torch and a cooling system for cooling the torch**
Schweissvorrichtung mit einem Brenner und einer Kühleinrichtung zum Kühlen des Brenners
Dispositif de soudage avec une torche et un système de refroidissement pour la torche

(30) Priority: 23.07.2003 US 604459; 07.10.2003 US 605546
(43) Date of publication of application: 26.01.2005
(73) Proprietor: ILLINOIS TOOL WORKS INC., Glenview, Illinois 60025 (US)
(72) Inventor: Stein, Alan E., Wisconsin 54140 (US); Werba, David A., Wisconsin 54902 (US); Gadamus, Jeffery J., Wisconsin 54944 (US); Lauer, LeRoy H., Jr., Wisconsin 54944 (US); Paquette, Justin L., Michigan 49663 (US); Sammons, Michael, Wisconsin 54914 (US)
(74) Representative: Vetter, Ewald Otto

(56) References cited:
- WO-A-20/04028738
- FR-A- 2 536 320
- FR-A- 2 723 330
- GB-A- 827 314
- GB-A- 1 225 907
- GB-A- 1 243 596
- US-A- 2 510 207
- US-A- 2 949 528
- US-A- 3 019 329
- US-A- 3 210 515
- US-B1- 6 399 913

## Description

The present invention relates generally to welding-type system according to the preamble of claim 1 and, more particularly, to an apparatus of an automatically and conditionally cooling a welding-type system upon activation of the welding-type system. More particularly, the invention relates to circulating coolant automatically through a power source and a welding-type torch upon initiation of a welding-type process.

The document GB 827 314 A, on which is based the preamble of claim 1, discloses a welding-type system comprising a welding-type component configured to present an electrode to a weld. The conventional system further comprises a cooling system configured to automatically circulate a coolant through at least the welding-type component upon activation of the welding-type component. In detail, the cooling system of the conventional welding-type system is controlled by a valve system and a relay switch system. The relay switch system itself controls the valve system in order to permit flow of cooling water during the pass of a welding-arc. Hence, the operation of the relay switch system controls automatically the flow of the coolant to remove heat from the fusion zone of the welding-type component. The relay system further provides for a continued flow of coolant after the arc is extinguished for a predetermined time interval sufficient to allow the temperature of the welding electrode and the work immediately adjacent thereto to cool to a temperature below a region of fusion temperatures.

The document US-B-6,399,913 discloses a welding-type system comprising a welding torch which includes a jacket radially spaced from a tubular handle. The jacket may be configured to facilitate ingress and egress of water in thermal proximity to the tubular handle so as to absorb and dissipate heat thermally translated to the coolant from the tubular handle.

The document FR-A-2,536,320 discloses a welding-type system comprising a cooling system having a coolant tank, a pump, a motor assembly, a heat exchanger, and a fan operationally connected to one another to circulate coolant to a welding-type component.

The document US-A-2,510,207 discloses a welding apparatus comprising a welding-torch having an electrode and a nozzle, an electric circuit for passing welding current through the electrode and the work, and a cooling system for supplying a cooling fluid to the welding-torch. In order to provide an automatic control for cutting off the flow of cooling water after the electrode has cooled below an oxidation temperature, a timed control loop is provided whereupon a length of time is predetermined and coolant allowed to flow until expiration of that length of time on the presumption that the torch will cool to a desired temperature during that length of time. With the conventional system, there is a presumption that the set time of the timer is of sufficient length to provide for adequate cooling.

The document US-A-2,949,528 discloses a welding apparatus with a cooling system. The cooling system comprises a coolant tank, a pump, a motor assembly, and a heat exchanger.

The document GB-A-1,243,596 discloses a welding apparatus comprising a cooling system. The conventional cooling system comprises a pump and a fan and is suitable and adapted to circulate coolant through the welding apparatus prior to starting the welding operation.

It is well known that certain welding processes such as heavy-duty TIG (tungsten inert gas) welding generate a considerable amount of heat during the welding process. A welding component or welding torch is commonly used to hold a tungsten electrode that is heated to join metals through heat transfer. Because tungsten is a rare metallic element with an extremely high melting point (approximately 3410°C), the electrode can withstand a tremendous heat load and use the heat to join metals with or without filler material. The heat generated, however, can cause the welding torch to become increasingly heated. A cooling system is typically required to prevent overheating of the torch. Generally, the welding torch is liquid-cooled with coolant, such as water, which is supplied from a coolant source remote from the power source. The welding torch may also be air cooled.

One of the drawbacks with these standard cooling systems is that the cooling system is manually operable. That is, a typical cooling system is equipped with an ON/OFF switch that requires an operator to manually turn on the cooling system at the commencement of the welding process. When the cooling system is activated, coolant is caused to circulate through the power source and the welding torch. It can therefore be problematic if the operator forgets to turn the cooling system on before commencing welding. As a result, the temperature of the torch quickly rises to maximum acceptable limits and if not immediately cooled, can cause the torch to break down and malfunction. It is also costly to interrupt the welding process and allow the torch to cool. Moreover, the operator may forget to turn off the cooling system during extended periods of downtime. As such, the cooling system continues to circulate coolant to the welding torch even when cooling is not needed which increases energy consumption and causes premature wear out of components.

Another disadvantage of manually actuated cooling system rests in that the operator may turn off the cooling system prematurely following completion of a welding session. It may take several minutes following welding termination for the temperature of the torch to drop below an acceptable set point. However, if the operator prematurely shuts down the cooling system, the temperature of the torch may actually increase for a short and potentially damaging period. These drawbacks can significantly reduce the life expectancy of the cooling system and/or torch and increase the overall energy consumption of the system. All of which increases the costs of the welding system.

Therefore, it would be desirable to design a cooling system that automatically circulates coolant through at least the welding torch upon activation of the torch or commencement of the welding process and maintains coolant flow until the temperature of the torch falls below a specified set point or expiration of a prescribed time period that is of sufficient length to allow the torch to cool to below the specified set point.

### BRIEF DESCRIPTION OF THE INVENTION

The present invention solves the aforementioned problems by providing a welding-type system according to claim 1. Commencement of the welding process occurs when a welding arc is struck between an electrode and a workpiece. The cooling system is configured to circulate the coolant through the torch for a set period of time after deactivation of the torch until temperature of the torch falls below a temperature set point.

There are a large number of welding processes available for use in industry. These welding processes include gas tungsten arc, oxygen gas welding, and shielded metal arc welding. The gas tungsten arc welding process is generally referred to as TIG (tungsten inert gas) welding. A typical TIG welding apparatus includes a welding component which is commonly referred to as welding torch and is designed to introduce a tungsten electrode to a weld. The welding torch holds the electrode which is heated to extremely high temperatures by electrical power received from the power source. The welding torch is designed to introduce the electrode to a weld such that the electrode "scratches" the workpiece and is removed therefrom. At appropriate voltage and current, a welding arc is created between the electrode and the workpiece. The torch typically includes a trigger mechanism for initiating the welding process, i.e., closing the circuit between the workpiece and the power source.

Accordingly, one aspect of the present invention includes a welding-type component configured to present an electrode to a weld. A cooling system is configured to automatically circulate liquid coolant through at least the welding-type component upon activation of the welding-type component.

The welding-type apparatus according to the present invention includes means for providing welding-type power and means for outputting welding-type power to an output area. The apparatus further includes means for detecting activation of the means for the outputting welding-type power and means for automatically circulating coolant through at least the means for providing welding-type power upon activation of the means for outputting welding-type power and maintaining coolant circulation until coolant temperature falls below a certain set point.

Various other features, objects and advantages of the present invention will be made apparent from the following detailed description and the drawings.

### BRIEF DESCRIPTION OF THE DRAWINGS

The drawings illustrate one preferred embodiment presently contemplated for carrying out the invention.

In the drawings:
Fig. 1 is a perspective view of a welding-type system incorporating the present invention.
Fig. 2 is a block diagram of a welding system in accordance with one aspect of the present invention.
Fig. 3 is a perspective view of a welding torch for use with the present invention.
Fig. 4 is a flow chart setting forth the steps of a control algorithm for on-demand coolant circulation through components of a welding system in accordance with the present invention.
Fig. 5 is a flow chart setting forth the steps of an alternate control algorithm for on-demand coolant circulation through components of a welding system in accordance with the present invention.

### DETAILED DESCRIPTION OF THE PREFERRED EMBODIMENT

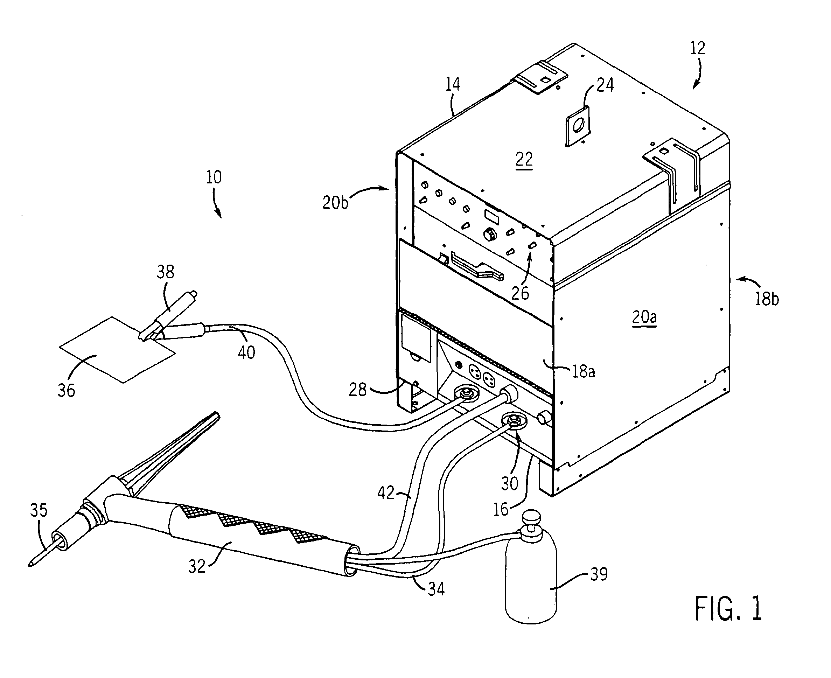

Fig. 1 is a perspective view of a welding-type system 10 suitable for a number of welding processes including tungsten inert gas (TIG) welding and stick welding. The welding-type system 10 includes a power source 12 disposed within an enclosure 14. Enclosure 14 is defined by a base 16, front and back panels 18a, 18b, and a pair of side panels 20a, 20b attached to the base 16. A top cover 22 having a lifting means 24 is secured to the pair of side panels 20a, 20b to form enclosure 14. The front panel includes control knobs 26 and outlets and receptacles 28 to facilitate connection of welding accessories to the enclosure. For example, an electrode weld output terminal 30 is used to connect a torch or other welding-type component 32 to the power source via cable 34. The torch is designed to hold a tungsten electrode 35. To complete a welding circuit, a workpiece 36 is introduced to a weld by a clamp 38 that is also connected to the power source by cable 40. A gas cylinder 39 is used to store shielding gas which is delivered to the torch during the welding process.

Enclosed in the enclosure 14 are the welding-type power source and a cooling system. The power source is constructed to condition raw power from a power supply into a power suitable for welding. In the preferred embodiment, the welding-type power supply and cooling system are disposed within the common enclosure 14. The cooling system is designed to circulate coolant through the torch 32 via coolant conduit 42. The coolant system is designed such that coolant automatically flows into the torch when the welding process begins, i.e., the torch is activated or an arc is struck. Alternately, the integrated cooling system may be remote from the power source.

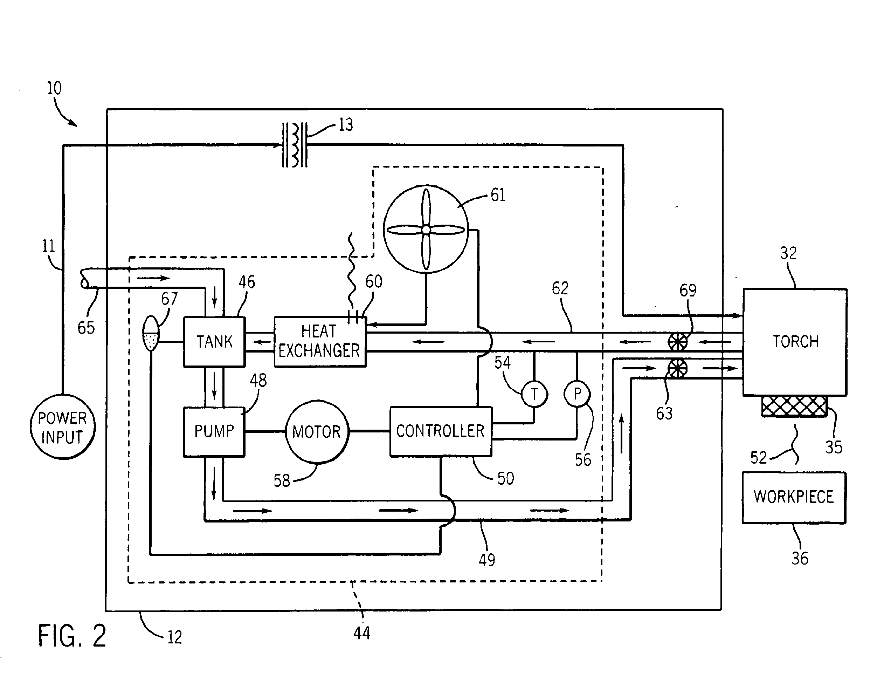

Fig. 2 is a block diagram of a welding system 10 designed to condition raw power from a raw power input 11 into a form usable in a welding-type process. The system includes power source 12, a power conditioning or transformer assembly 13, a TIG torch 32, a work piece 36, and a cooling system 44. The cooling system 44 includes a coolant tank 46 and pump assembly 48 designed to pump fluid from the tank to heat zones in the welding system, such as the electrode holder or torch 32, in response to control signals from controller 50. Alternately, pump 48 or other circulation powering device may recirculate fluid contained in fluid path 49 rather than pulling coolant from tank 46. The cooling system 44 is configured to adaptively circulate coolant to and from torch 32 upon activation. For example, coolant circulation automatically begins when a welding arc 52 is struck between the tungsten electrode 35 and the workpiece 36.

Controller 50 is adapted to electronically communicate with the cooling system to effectuate automatic commencement of coolant circulation to torch 32 when the welding process begins. The controller 50 is also connected to a temperature sensor 54 designed to provide feedback as to the temperature of the torch and/or the coolant within the torch as well as a pressure sensor or flow meter 56 to provide feedback regarding coolant pressure in the system. In this regard, controller 50 can turn on or off pump 48 to control the flow of coolant to and from the torch. The temperature sensor 54 provides temperature feedback to the controller such that circulation is maintained after a welding process is complete if the temperature exceeds a specified set point.

Cooling system 44 also includes a motor assembly 58 to drive pump 48 and a heat exchanger 60 and fan assembly 61 operationally connected to one another to remove the heat carried by the coolant from the torch. During one operational embodiment, the pump 48 draws coolant from tank 46 and delivers the coolant to torch 32 through coolant path 49. The coolant absorbs heat from the torch and carries the heated coolant to heat exchanger via path 62. The heat exchanger 60 may include a coiled radiator to remove the heat from the coolant to the surrounding atmosphere and dissipated by fan 61. The cooled coolant is then re-deposited in tank 46 and further allowed to cool before recirculated back to torch 32. As illustrated, cooling system 44 is integrated within the welder or power source 12. However, the cooling system 44 may be a modular or portable unit separately mounted to the power source or other welding or transport equipment.

Cooling system 44 further includes a check valve 63 in coolant supply path 49 that is biased such that coolant is prevented from flowing out of the system when torch 32 is not connected to the power source. Additionally, the system may be constructed with additional check valves, i.e. check valve 69 in the coolant return path 62, to further regulate coolant flow. The check valves are designed to prevent coolant flow when the torch is not connected or when the power source is being serviced and the like.

Cooling system 44 is designed such that coolant is supplied to tank 46 through a spout 65 that extends externally of the power source 12. Having spout 65 extending outside the power source frame reduces and, preferably, eliminates accidental coolant and internal power source component contact. Tank 46 is preferably constructed to hold approximately three gallons of coolant, such as water.

A coolant level indicator 67 is provided for real-time status of coolant level in the tank. Indicator 67 is preferably mounted externally to the frame of the power source. Additionally, controller 50 may be connected to level indicator 67 such that warnings (audio and visual) may be activated if the coolant falls below acceptable levels.

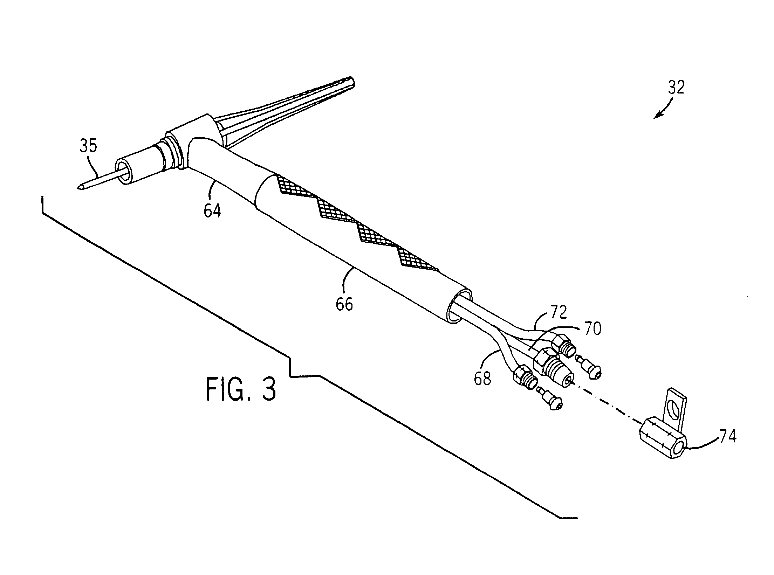

Fig. 3 illustrates torch 32 as having an elongated tubular body 64 connected to a handle 66. The handle 66 is relatively hollow which allows for extension of a water hose 68, water hose/power cable 70, and a gas hose 72. Hose 68 provides a coolant jacket that facilitates the ingress of coolant to the torch. Torch 32 is constructed to have an input hose 68 and an output hose 70 for carrying coolant to and from the torch. As such, heat generated within the torch is carried away to prevent overheating of the torch. Gas hose 72 facilitates the flow of shielding gas to the weld. Power cable 70 includes an adapter 76 to connect the weld cable from the power source to the torch.

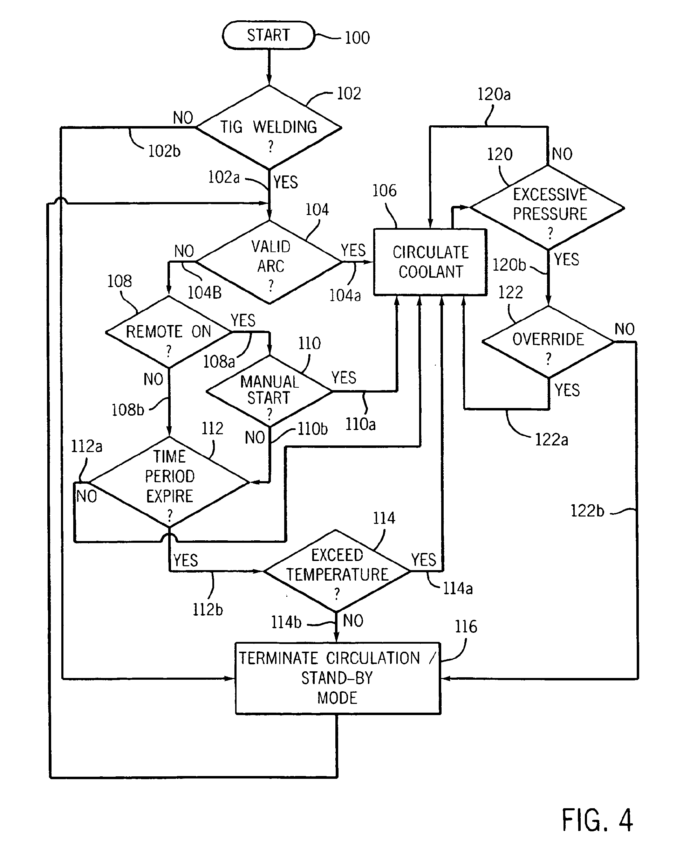

Referring now to Fig. 4, the steps of a control algorithm to adaptively regulate cooling of a torch are set forth. The process begins at START 100 with powering-up of the power source, the coolant assembly, and other components of the welding process are likewise powered. Once the user identifies the welding process to be used through appropriate switches on the power source, a determination is made at 102 whether a TIG welding process is to be carried out. Since some welding processes do not require coolant circulation and power sources are capable of carrying out more than one process, the aforementioned determination is preferred and reduces the likelihood that an operator would forget to activate the cooling system for a TIG welding session. If a TIG welding process is not selected, the cooling system is placed in a stand-by mode 116. The controller 50 then detects whether a valid arc 104 is present at the weld. That is, the controller determines if a welding arc 40 has been struck between the welding torch 30 and the work piece 32 indicative of welding commencement. The controller 50 transmits a circulation commencement signal to the cooling system 28 to activate motor 58 and pump 48 at 106 such that coolant is circulated through the welding torch. If a valid arc is not detected 104b, the controller determines if remote operation has been activated 108. If so 108a, coolant is caused to circulate upon manual start-up of the welding power source 26 at step 110, 110a. The controller then transmits a circulation commencement signal to activate the solenoid pump 62 and cause coolant flow through the torch at step 106. If the controller does not detect a manual start 110b or remote operation 108b, the controller determines if a specified time period has expired after termination of the arc at 112. If the time period has not expired 112a, coolant circulation is maintained at 106. If not 112b, the algorithm proceeds to step 114. According to the present invention, the controller is further configured to regulate the integrated cooling system such that coolant flow is maintained after deactivation of the welding torch until a temperature of the liquid coolant or torch falls below a certain value. The controller 50 compares temperature feedback from a sensor with a first set point temperature to determine if circulation should be maintained. In this regard, if the temperature of the liquid coolant does not exceed the temperature set point, then the integrated cooling system 28 is placed in stand-by mode 116. That is, the controller 50 is configured to repeatedly detect a coolant temperature signal from one or more temperature sensors and if coolant temperature exceeds a threshold, circulation continues independent of welding torch activation status.

The algorithm also instructs the controller to regulate coolant flow based on coolant pressure in the system. As such, break-down in coolant lines or other failures in the cooling system that affect the amount and force of coolant flow are readily identified. An excessive flow condition may indicate that coolant supply pressure has exceeded a maximum level signaling malfunction of the pump and/or motor. Similarly, an insufficient flow condition may indicate a failure of the coolant supply or a general blockage of the coolant supply or return lines. Therefore, the controller 50 detects at step 120 whether coolant pressure is within acceptable limits. If so 120a, circulation continues at 106. If not 120b, the controller determines whether a pressure override has been selected at step 122. If so 122, 122a, coolant flow continues despite the pressure being outside acceptable limits. If not 122, 122b, coolant circulation ceases and the cooling system is returned to stand-by state at 116.

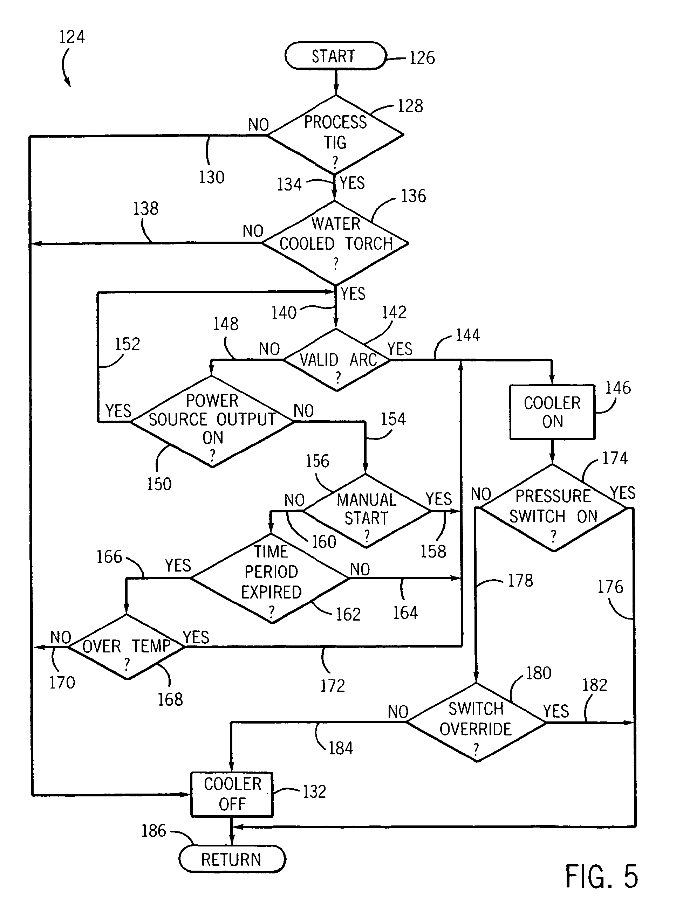

Referring now to Fig. 5, the steps of an alternate control algorithm to adaptively regulate cooling of a torch are set forth. The process 124 begins at START 126 with powering-up of the power source, the coolant assembly, and other components of the welding process are likewise powered. A determination is then made at 128 whether a TIG welding process is to be carried out. Since some welding processes do not require coolant circulation and power sources are capable of carrying out more than one process, the aforementioned determination is preferred and reduces the likelihood of operator error. If a TIG welding process is not determined 128, 130, the cooling system is turned off at 132. However, if it is determined that a TIG welding process is to be carried out 128, 134, the controller then determines whether a water cooled torch is connected to the power source at 136. Determination of whether a water cooled TIG torch is connected may be made based on user feedback, feedback from the torch itself, or a combination thereof. If a water cooled TIG torch is not connected 136, 138, the cooling system is turned off at 132 so that coolant is not circulated to the torch. In contrast, if a water cooled TIG torch is connected 136, 140, an arc status is determined at 142.

In this regard, the controller 50 then detects whether a valid arc 142 is present at the weld. That is, the controller determines if a welding arc 40 has been struck between the welding torch 32 and the work piece 36 indicative of welding commencement. If a valid arc is detected 142, 144, the controller 50 transmits a circulation commencement signal to the cooling system 44 to activate motor 58 and pump 48 at 146 such that coolant is circulated through the welding torch. If a valid arc is not detected 142, 148, the controller determines if the power source is outputting power 150. If so 150, 152, the process returns to step 142 to determine if a valid arc is present at the weld. In this regard, if coolant is circulating to the torch, coolant circulation will be maintained if the power source is delivering power even though an arc is not present at the weld. Steps 142-150 will repeat for a maximum period of time, i.e. thirty seconds, whereupon the power source is automatically caused to not deliver power. Simply, when an arc is not present at the weld, the power source is maintained in a power delivery or stand-by mode for a controlled period of time. As such, if the power source is not delivering power 150, 154, the controller determines if coolant circulation is being maintained or otherwise activated manually.

Manual operation of the coolant system allows a user to control the cooling of the torch and/or power source and, as such, override the system. Therefore, if manual control is selected 156, 158, the cooling system is caused to circulate coolant at 146. However, if manual control has not been initiated 156, 160, the process determines if a set time period has expired 162. In this regard, the controller determines if a specified time period has expired after termination of the arc. If the time period has not expired 162, 164, coolant circulation is maintained at 146. If not 162, 166, the process proceeds to step 168.

According to the present invention, the controller is configured to regulate the integrated cooling system such that coolant flow is maintained after deactivation of the welding torch until a temperature of the liquid coolant or torch falls below a certain value. Accordingly, the controller 50 compares temperature feedback from a sensor at 168 with a first set point temperature to determine if circulation should be maintained. If the temperature of the liquid coolant does not exceed the temperature set point 168, 170 then the integrated cooling system 44 is turned off and coolant circulation terminates at 132. That is, the controller 50 is configured to repeatedly detect a coolant temperature signal from one or more temperature sensors and if coolant temperature exceeds a threshold 168, 172, circulation continues at 146 independent of welding torch activation status.

The process also instructs the controller to regulate coolant flow based on coolant pressure in the system. As such, break-down in coolant lines or other failures in the cooling system that affect the amount and force of coolant flow are readily identified. An excessive flow condition may indicate that coolant supply pressure has exceeded a maximum level signaling malfunction of the pump and/or motor. Similarly, an insufficient flow condition may indicate a failure of the coolant supply or a general blockage of the coolant supply or return lines. Therefore, the controller 50 detects at step 174 whether a pressure control switch has been activated. If so 174, 176, coolant circulation is maintained. If not 174, 178, the controller determines whether a pressure override has been selected at 180. If so 180, 182, coolant flow continues despite the pressure being outside acceptable limits. If not 180, 184, coolant circulation ceases with the cooling system being turned off at 132.

The heretofore described steps are to be repeatedly executed by one or more processors and, as such, at step 186, the processor loops backs to step 128. For example, the steps of the algorithm are carried out repeatedly every 10 ms by a microprocessor in the power source or cooling system. As such, once the cooling system is placed in stand-by mode or otherwise turned off, the controller confirms that a valid arc has been struck or other indicators that welding has re-commenced such as a manual start before recommencement of coolant circulation.

Accordingly, the present invention includes a welding-type system including a power source and a cooling system. A welding torch is connected to both the power source and the integrated cooling system. A controller is configured to regulate the integrated cooling system such that, upon activation of the welding torch, coolant is caused to at least flow through the welding torch and continue to circulate after deactivation of the welding torch until a temperature of the torch or coolant falls below a certain value.

The present invention has been described in terms of the preferred embodiment, and it is recognized that equivalents, alternatives, and modifications, aside from those expressly stated, are possible and within the scope of the appending claims.

## Claims

1. A welding-type system (10) comprising:
a welding-type component (32) configured to present an electrode (35) to a weld; and
a cooling system (44) configured to automatically circulate coolant (42) through at least the welding-type component (32) upon activation of the welding-type component (32),
**characterized in that**
the cooling system (44) is further configured to automatically maintain coolant circulation upon deactivation of the welding-type component (32) if a measured coolant temperature exceeds a certain value, wherein the welding-type system (10) further comprises a power source (12) and a controller (50) adapted to electrically communicate with the power source (12), the welding-type component (32) and the cooling system (44), wherein the cooling system (44) further comprises a temperature sensor (54) designed to provide feedback to the controller (50) concerning the temperature of the torch and/or the coolant (42) within the torch, wherein the controller (50) is configured to automatically activate the cooling system (44) when the welding-type component (32) is activated and to regulate the cooling system (44) such that coolant flow is maintained after deactivation of the welding-type component (32) until the temperature measured by the temperature sensor (54) falls below a first set point temperature.

2. The welding-type system (10) of claim 1 wherein the cooling system (44) is further configured to circulate coolant (49) through the welding-type component (32) for a set period of time after deactivation of the welding-type component (32).

3. The welding-type system (10) of claim 2 wherein the cooling system (44) is further configured to automatically terminate circulation when the set period of time expires or temperature of coolant is below a second set point temperature (170).

4. The welding-type system (10) of claim 1 wherein the welding component (32) includes a welding torch designed to receive a water hose (G8) for circulation of water therein.

5. The welding-type system (10) of claim 4 wherein the welding torch further includes a jacket (68) radially spaced from the tubular handle (66), the jacket (68) configured to facilitate ingress and egress of water in thermal proximity to the tubular handle (66) so as to absorb and dissipate heal thermally translated to the coolant from the tubular handle (66).

6. The welding-type system (10) of claim 1 wherein the cooling System (44) further comprises a coolant tank (46), a pump (48), a motor assembly (58), a heat exchanger (60), and a fan (61) operationally connected to one another to circulate coolant (42) to the welding-type component (32) automatically upon activation and during activation of the welding-type component (32).

7. The welding-type system (10) of claim 1 wherein the power source (12) and the cooling system (44) are disposed within a common enclosure (14).

8. The welding-type system (10) of claim 1 wherein the activation includes power (12) delivered to the output (30).

9. The welding-type system (10) of claim 1 wherein the cooling system (44) includes a pressure sensor (56) to provide feedback as to coolant pressure through the welding-type component (32).

## Patentansprüche

1. Schweißsystem (10), das Folgendes umfasst:
eine Schweißkomponente (32), die zur Zuführung einer Elektrode (35) zu einer Schweißstelle konfiguriert ist;
und
ein Kühlsystem (44), das zum automatischen Zirkulieren von Kühlmittel (42) durch mindestens eine Schweißkomponente (32) bei Aktivierung der Schweißkomponente (32) konfiguriert ist,
**dadurch gekennzeichnet, dass**
das Kühlsystem (44) weiterhin dazu konfiguriert ist, bei Aktivierung der Schweißkomponente (32) Kühlmittelzirkulation automatisch aufrechtzuerhalten, wenn eine gemessene Kühlmitteltemperatur einen bestimmten Wert überschreitet, wobei das Schweißsystem (10) weiterhin eine Energiequelle (12) und eine zur elektrischen Verbindung mit der Energiequelle (12), der Schweißkomponente (32) und dem Kühlsystem (44) konfigurierte Steuerung (50) umfasst, wobei das Kühlsystem (44) weiterhin einen Temperaturfühler (54) umfasst, der zur Bereitstellung von Rückkopplung an die Steuerung (50) über die Temperatur des Brenners und/oder des Kühlmittels (42) im Brenner ausgeführt ist, wobei die Steuerung (50) dazu konfiguriert ist, das Kühlsystem (44) automatisch zu aktivieren, wenn die Schweißkomponente (32) aktiviert wird, und das Kühlsystem (44) so zu regulieren, dass der Kühlmittelstrom nach der Deaktivierung der Schweißkomponente (32) so lange aufrechterhalten wird, bis die durch den Temperaturfühler (54) gemessene Temperatur unter eine erste Einstelltemperatur fällt.

2. Schweißsystem (10) nach Anspruch 1, bei dem das Kühlsystem (44) weiterhin dazu konfiguriert ist, nach der Deaktivierung der Schweißkomponente (32) für eine eingestellte Zeitdauer Kühlmittel (49) durch die Schweißkomponente (32) zu zirkulieren.

3. Schweißsystem (10) nach Anspruch 2, bei dem das Kühlsystem (44) weiterhin dazu konfiguriert ist, die Zirkulation zu beenden, wenn die eingestellte Zeitdauer abläuft oder die Temperatur des Kühlmittels unter eine zweite Einstelltemperatur (170) fällt.

4. Schweißsystem (10) nach Anspruch 1, bei dem die Schweißkomponente (32) einen Schweißbrenner enthält, der zur Aufnahme eines Wasserschlauchs (68) zur Zirkulation von Wasser darin ausgeführt ist.

5. Schweißsystem (10) nach Anspruch 4, bei dem der Schweißbrenner weiterhin einen Mantel (68) enthält, der von dem röhrenförmigen Griff (66) radial beabstandet ist, wobei der Mantel (68) dazu konfiguriert ist, das Eintreten und Austreten von Wasser in thermischer Nähe des röhrenförmigen Griffes (66) zu erleichtern, um von dem röhrenförmigen Griff (66) thermisch auf das Kühlmittel übertragene Wärme zu absorbieren und abzuführen.

6. Schweißsystem (10) nach Anspruch 1, bei dem das Kühlsystem (44) weiterhin einen Kühlmittelbehälter (46), eine Pumpe (48), eine Motoranordnung (58), einen Wärmetauscher (60) und ein Gebläse (61) umfasst, die miteinander wirkverbunden sind, um bei und während der Aktivierung der Schweißkomponente (32) das Kühlmittel (42) automatisch zur Schweißkomponente (32) zu zirkulieren.

7. Schweißsystem (10) nach Anspruch 1, bei dem die Energiequelle (12) und das Kühlsystem (44) in einem gemeinsamen Gehäuse (14) angeordnet sind.

8. Schweißsystem (10) nach Anspruch 1, bei dem die Aktivierung zum Ausgang (30) gelieferte Energie (12) umfasst.

9. Schweißsystem (10) nach Anspruch 1, bei dem das Kühlsystem (44) einen Druckfühler (56) zur Bereitstellung von Rückkopplung über Kühlmitteldruck durch die Schweißkomponente (32) enthält.

## Revendications

1. Système de soudage (10), comprenant:
un composant de soudage (32) configuré pour présenter une électrode (35) à une soudure; et
un système de refroidissement (44) configuré pour faire circuler automatiquement un agent de refroidissement (42) à travers au moins le composant de soudage (32) à l'activation du composant de soudage (32);
**caractérisé en ce que**:
le système de refroidissement (44) est en outre configuré pour maintenir automatiquement la circulation de l'agent de refroidissement à la désactivation du composant de soudage (32) si une température mesurée de l'agent de refroidissement dépasse une certaine valeur, dans lequel le système de soudage (10) comprend en outre une source de puissance (12) et un dispositif de commande (50) adapté pour communiquer électriquement avec la source de puissance (12), le composant de soudage (32) et le système de refroidissement (44), dans lequel le système de refroidissement (44) comprend en outre un capteur de température (54) conçu pour indiquer en retour au dispositif de commande (50) la température de la torche et/ou de l'agent de refroidissement (42) à l'intérieur de la torche, dans lequel le dispositif de commande (50) est configuré pour activer automatiquement le système de refroidissement (44) lorsque le composant de soudage (32) est activé, et pour réguler le système de refroidissement (44) de telle sorte que l'écoulement de l'agent de refroidissement soit maintenu après la désactivation de l'élément de soudage (32) jusqu'à ce que la température mesurée par le capteur de température (54) chute en dessous d'une première température de pointe déterminée.

2. Système de soudage (10) selon la revendication 1, dans lequel le système de refroidissement (44) est en outre configuré pour faire circuler un agent de refroidissement (49) à travers le composant de soudage (32) pendant une période de temps déterminée après la désactivation du composant de soudage (32).

3. Système de soudage (10) selon la revendication 2, dans lequel le système de refroidissement (44) est en outre configuré pour arrêter automatiquement la circulation lorsque la période de temps déterminée expire ou que la température de l'agent de refroidissement est inférieure à une deuxième température de pointe déterminée (170).

4. Système de soudage (10) selon la revendication 1, dans lequel le composant de soudage (32) comprend une torche de soudage conçue pour recevoir un tuyau d'eau (68) pour faire circuler de l'eau dans celle-ci.

5. Système de soudage (10) selon la revendication 4, dans lequel la torche de soudage comprend en outre une chemise (68) radialement espacée de la poignée tubulaire (66), la chemise (68) étant configurée pour faciliter l'entrée et la sortie d'eau dans le voisinage thermique de la poignée tubulaire (66) de manière à absorber et dissiper la chaleur transmise thermiquement à l'agent de refroidissement à partir de la poignée tubulaire (66).

6. Système de soudage (10) selon la revendication 1, dans lequel le système de refroidissement (44) comprend en outre un réservoir d'agent de refroidissement (46), une pompe (48), un ensemble de moteur (58), un échangeur de chaleur (60) et un ventilateur (61) connectés de façon opérationnelle les uns aux autres pour faire circuler automatiquement un agent de refroidissement (42) vers le composant de soudage (32) à l'activation et pendant l'activation du composant de soudage (32).

7. Système de soudage (10) selon la revendication 1, dans lequel la source de puissance (12) et le système de refroidissement (44) sont disposés à l'intérieur d'une enceinte commune (14).

8. Système de soudage (10) selon la revendication 1, dans lequel l'activation comprend la puissance (12) délivrée à la sortie (30).

9. Système de soudage (10) selon la revendication 1, dans lequel le système de refroidissement (44) comprend un capteur de pression (56) destiné à indiquer en retour la pression de l'agent de refroidissement lorsqu'il traverse le composant de soudage (32).
